# EUROPÄISCHE PATENTSCHRIFT

(11) **EP 2 110 590 B1**
(45) Veröffentlichungstag und Bekanntmachung des Hinweises auf die Patenterteilung: **04.04.2012**
(21) Anmeldenummer: 09100223.8
(22) Anmeldetag: 06.04.2009
(51) Int. Cl.: F16K 31/00, F16K 99/00

(54) **Absperrorgan**
Blocking device
Organe de verrouillage

(30) Priorität: 14.04.2008 DE 102008001153
(43) Veröffentlichungstag der Anmeldung: 21.10.2009
(73) Patentinhaber: ROBERT BOSCH GMBH, 70442 Stuttgart (DE)
(72) Erfinder: Hagemann, Benjamin, 70839 Gerlingen (DE); Schmidt, Ralf, 70839 Gerlingen (DE); Bolz, Martin-Peter, 77815 Bühl (DE)

(56) Entgegenhaltungen:
- EP-A- 1 679 032
- WO-A-2005/086249
- WO-A-2007/029275
- GB-A- 2 376 795
- US-A- 5 977 685

## Beschreibung

### Stand der Technik

Die vorliegende Erfindung betrifft eine Anordnung aus mehreren Absperrorganen gemäß dem Oberbegriff des unabhängigen Patentanspruchs.

Eine Absperrorgan ist aus der WO2006/02009 bekannt und weist ein Durchlasselement und ein Schließelement auf, wobei in dem Durchlasselement eine Durchlassöffnung ausgebildet ist, wobei ein Aktor vorgesehen ist, um das Schließelement zwischen einer Schließstellung und einer Öffnungsstellung zu bewegen, wobei der Aktor in einem Durchströmungsbereich aufgenommen ist und ein Element aus elektroaktivem Werkstoff und zwei Elektroden umfasst Ein Durchströmungsbereich ist in diesem Zusammenhang allgemein ein Hohlraum, der zumindest mit einem Bereich verbunden ist, durch den ein Fluid auf dem Weg von einer Kammer in eine andere Kammer oder Außenumgebung aufgrund einer Druckdifferenz strömt. Der Aktor ist mit dem Schließelement identisch. Wenn an die Elektroden entgegen gesetzte Spannungen angelegt werden, streckt sich das Stück aus elektroaktivem Werkstoff in Längsrichtung und überdeckt die Durchlassöffnung, um diese abzusperren. Das Stück aus elektroaktivem Werkstoff wird dabei nicht gegen das Durchlasselement gedrückt, in dem die Durchlassöffnung ausgebildet ist.

Ein Nachteil eines solchen Absperrorgans liegt darin, dass aufgrund einer fehlenden Krafteinwirkung des Schließelements auf das Durchlasselement kein dichter Verschluss geschaffen wird, der auch hohen Druckbelastungen standhalten kann. Aufgrund der geringen, technisch realisierbaren, relativen Längenausdehnung eines Aktors mit nur einem einzigen Stück aus elektroaktivem Werkstoff muss das Stück aus elektroaktivem Werkstoff außerdem relativ lang ausgebildet werden. Die Verwirklichung eines kompakten Absperrorgans ist daher nicht möglich.

Die DE 10 2004 043 403 offenbart ein weiteres Absperrorgan. Der Aktor des Schließelements ist außerhalb des Durchströmungsbereichs und der beiden Kammern vorgesehen, welche der Durchströmungsbereich miteinander verbindet Der Aktor ist mit dem Schließelement über einen beweglichen Schaft verbunden, der in einer Öffnung aufgenommen ist

Ein Nachteil eines solchen Absperrorgans liegt darin, dass durch die Öffnung, in welcher der Schaft aufgenommen ist Fluide entweichen können. Auch dieses Absperrorgan lässt sich nicht sehr kompakt ausbilden, da durch die Anordnung des Schafts und die erforderliche Dichtung der Öffnung, in welcher der Schaft aufgenommen ist, zusätzlicher Raum erforderlich ist.

Auch die EP 1679 032 A1 und die GB 2 376 795 A offenbaren Absperrorgane nach dem Oberbegriff des Anspruchs 1. Die dort verwendeten spiralförmig aufgewickelten elektroaktiven Werkstoffe erlauben es jedoch nicht, eine Anordnung von mehreren Aktoren an einem gemeinsamen elektroaktiven Element vorzusehen.

### Offenbarung der Erfindung

Die vorliegende Erfindung betrifft eine Anordnung aus mehreren Absperrorganen, wobei jedes der Absperrorgane ein Durchlasselement und ein Schließelement umfasst, wobei in jedem Durchlasselement eine Durchlassöffnung ausgebildet ist, wobei jedes Absperrorgan ein Aktor aufweist, um das jeweilige Schließelement zwischen einer Schließstellung und einer Öffnungsstellung zu bewegen, wobei die Aktoren in einem Durchströmungsbereich aufgenommen sind, wobei die Schließelemente in der Schließstellung jeweils fest an einem Bereich der jeweiligen Durchlasselemente anliegen, der die jeweilige Durchlassöffnung umgibt, und wobei die Aktoren ein gemeinsames Element aus einem elektroaktiven Werkstoff und jeweils zwei Elektroden umfassen. Die Durchlasselemente können ebenfalls einstückig als ein Durchlasselement ausgebildet sein und In einer Trennwand integriert sein. Die Kontaktierung der Elektroden einer solchen Anordnung ist besonders einfach. Insbesondere kann eine der jeweils zwei Elektroden gemeinsam mit jeweils einer der zwei Elektroden kontaktiert werden, wobei die einzelnen Aktoren dennoch separat betätigt werden können. Die elektrischen Leitungen zur Kontaktierung der Elektroden können einfach und gut isoliert entlang der Oberfläche des gemeinsamen Elements aus elektroaktivem Werkstoff angeordnet werden.

In einer bevorzugten Ausführungsform ist das Element aus elektroaktivem Werkstoff als Folie ausgebildet, die zwischen den zwei flächigen Elektroden angeordnet ist. Die Aktoren weisen weitere gemeinsame Folien aus elektroaktivem Werkstoff auf, die jeweils zwischen zwei Elektroden eines jeden Aktors angeordnet sind. Diese zwei letztgenannten Elektroden können mit den zwei erstgenannten Elektroden identisch sein. Durch Verwendung von mehreren Folien kann der Aktorhub vergrößert werden, wodurch zum einen die Anpresskraft in der Schließstellung erhöht wird, und eine besonders hohe Dichtigkeit des Absperrorgans erreicht wird, und zum anderen eine besonders gute Durchströmung in der Öffnungsstellung erreicht wird.

In noch einer bevorzugten Ausführungsform ist das Element aus elektroaktivem Werkstoff als Folie ausgebildet, die zwischen den zwei Elektroden angeordnet ist, wobei die Folie mehrfach gefaltet ist, und wobei Bereiche der Folie jeweils zwischen zwei Elektroden angeordnet sind. Diese zwei letztgenannten Elektroden können mit den zwei erstgenannten Elektroden identisch sein. Es kann sich dabei beispielsweise um zwei elektrisch leitende Folien handeln, die auf den gegenüberliegenden Seiten der Folie aus elektroaktivem Werkstoff ausgebildet sind und ebenfalls gefaltet sind. Durch Verwendung einer gefalteten Folie kann der Aktorhub ebenfalls vergrößert werden. Ein solcher Aktor lässt sich auch besonders einfach in Verbindung mit stabilen Elektroden herstellen, um welche die Folie gefaltet wird.

In einer Weiterbildung der bevorzugten Ausführungsform weist jede der Folien eine Dicke zwischen 4 µm und 250 µm, vorzugsweise zwischen 4 µm und 100 µm, auf. Die Verwendung von möglichst dünnen Folien ermöglicht es, diese für relativ geringe Spannungsdifferenzen an den zwei Elektroden maximal zu verformen.

In noch einer bevorzugten Ausführungsform weist das Schließelement einen kegelstumpfförmigen Schlleßabschnitt auf. In der Schließstellung kann der kegelstumpfförmige Schließabschnitt, der gegen einen ebenfalls kegelstumpfförmigen Bereich des Durchlasselements gepresst wird, nicht verrutschen. Dadurch wird eine noch höhere Dichtigkeit des Absperrorgans erreicht

In noch einer bevorzugten Ausführungsform ist eine Rückstellfeder vorgesehen ist, um eine Rückstellung des Aktors zu beschleunigen.

Die erfindungsgemäße Anordnung kann Absperrorgane mit weiteren Merkmalen aufweisen, die im Zusammenhang mit irgendeinem der folgenden Ausführungsbeispiele beschrieben werden oder aus den Patentansprüchen bekannt sind, die sich auf ein Absperrorgan beziehen.

### Kurze Beschreibung der Zeichnungen

Im Folgenden wird die Erfindung mit Bezugnahme auf die Zeichnungen näher beschrieben. Es zeigen:
FIG. 1A eine Schnittansicht eines Absperrorgans nach dem Stand der Technik in einem Schließzustand;
FIG. 1B eine Schnittansicht des Absperrorgans aus FIG. 1A in einem Öffnungszustand;
FIG. 2A eine Schnittansicht einer erfindungsgemäßen Anordnung aus mehreren Absperrorganen in einem Schließzustand;
FIG. 2B eine Schnittansicht der erfindungsgemäßen Anordnung aus mehreren Absperrorganen aus FIG. 2A in einem Öffnungszustand; und
FIG. 2C eine schematische Ansicht der erfindungsgemäßen Anordnung aus mehreren Absperrorganen aus den FIG. 2A und FIG. 2B.
FIG. 3A eine Schnittansicht eines erfindungsgemäßen Absperrorgans in einem Öffnungszustand;
FIG. 3B eine Schnittansicht des Absperrorgans aus FIG. 3A in einem Schließzustand;

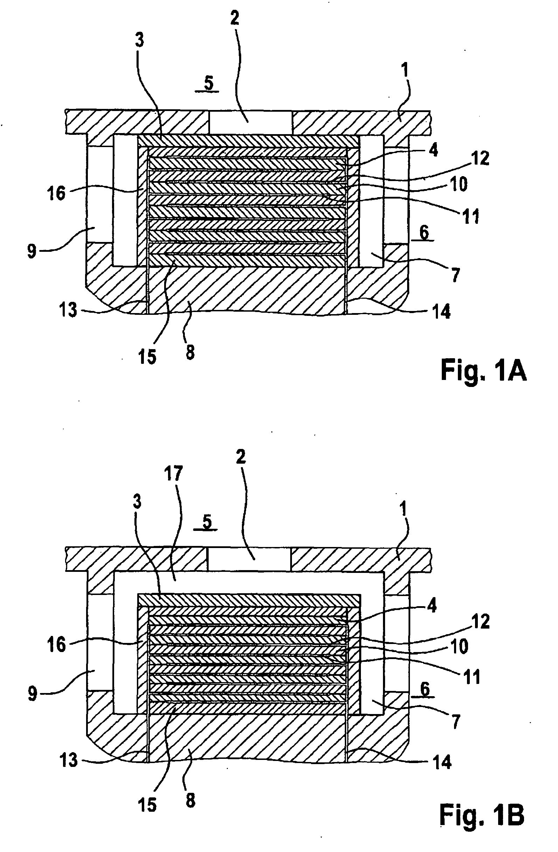

FIG. 1A zeigt eine Schnittansicht eines Absperrorgans nach dem Stand der Technik in einem Schließzustand. Ein solches Absperrorgan kann für irgendwelche Fluide verwendet werden und ist insbesondere für die Steuerung der Komfortfunktion oder der dynamisch adaptiven Sitzsteifigkeit von Luftkissen in Kraftfahrzeugsitzen oder für Vorsteuerventile in Ventiltrieben auf dem Gebiet der Industrieautomatisierung geeignet. Das Absperrorgan umfasst ein Durchlasselement 1, in dem eine kreisförmige Durchlassöffnung 2 ausgebildet ist, ein Schließelement 3 und einen Aktor 4. Das Durchlasselement 1 ist einstückig mit einer Trennwand ausgebildet, die zwei Fluidkammern 5, 6 voneinander trennt Das Schließelement 3 sperrt die Durchlassöffnung 2 ab und wird dabei von dem Aktor 4 elastisch gegen einen Oberflächenbereich des Durchlasselements 1 gedrückt, der die Durchlassöffnung 2 vollständig umgibt Der Aktor 4 und das Schließelement 3 sind in einem Durchströmungsbereich 7 aufgenommen. Das Schließelement 3 ist ebenfalls als Folie ausgebildet, welche den Aktor 4 gegenüber dem Durchlasselement 1 und dem Durchströmungsbereich 7 isoliert. Auf der gegenüberliegenden Seite stützt sich der Aktor 4 an einer Halterung 8 ab, welche den Durchströmungsbereich 7 umgibt und in der Öffnungen 9 ausgebildet sind. Die Halterung 8 ist mit der Trennwand verbunden, die einstückig mit dem Durchlasselement 1 ausgebildet ist Der Aktor wird durch eine der Öffnungen 9 in den Durchströmungsbereich 7 eingesetzt. Der Aktor 4 umfasst mehrere Folien 10, die aus einem elektroaktiven Polymer, insbesondere einem dielektrischen Elastomer wie Silikon, Fluor-Silikon, Polyurethan, Polybutadien, Polyacryl, Polytetrafluorethylen, P(VDF-TrFE)-Copolymer oder Isopren bestehen. Die Folien 10 haben eine Dicke zwischen 4 µm und 250 µm, sind elektrisch isolierend und haben eine hohe Lebensdauer. Die Folien 10 können unter anderen durch ein Spin-Coating-Verfahren oder Sprühverfahren hergestellt werden. Auf gegenüberliegenden Seiten einer jeden Folie 10 ist jeweils eine Elektrode 11 und 12 angeordnet, die aus einer Graphitpulverschicht besteht Alternativ können auch Kohlenstoffnanoröhren als Elektroden verwendet werden. Selbstklebende Oberflächenbereiche der Folien 10 haften jeweils an den Elektroden 11 bzw. 12 oder benachbarten Folien. Die Graphitpulverschicht ist so dünn, dass die Folien 10 jeweils auf gegenüberliegenden Seiten der gleichen Graphitkörner anhaften und die Bestandteile des Aktors eine feste Einheit bilden. Die Folien 10 und Elektroden 11, 12 sind nicht maßstabsgetreu, sondern für eine bessere Darstellbarkeit übertrieben dick dargestellt. Die Folien 10 sind übereinander im Wesentlichen planparallel zueinander und zu dem Durchlasselement 1 angeordnet, da sie und die Elektrode 11, 12 zwischen ihnen konstante Dicken haben. Insbesondere an den Enden der Elektroden 11, 12 ergeben sich jedoch geringe Abweichungen. Die Elektroden 11 und 12 bilden jeweils ein Elektrodenpaar und sind als Stapel übereinander angeordnet Die Elektroden 11 sind jeweils mit einer elektrischen Leitung bzw. Sammelelektrode 13 verbunden. Die anderen Elektroden 12 sind jeweils mit einer elektrischen Leitung bzw. Sammelelektrode 14 verbunden. Im Schließzustand liegt an den elektrischen Leitungen 13, 14 keine Spannung an. Der Aktor 4 weist unten eine weitere Folie 15 zur Isolation gegenüber der Halterung 8 und seitlich weitere Follen 16 zur Isolation gegenüber dem Durchströmungsbereich 7 auf. Statt der Folien 15 und 16 kann auch eine Beschichtung vorgesehen sein. Die elektrischen Leitungen 13, 14 können auch als Durchkontaktierungen ausgebildet sein und die Elektroden 11 und 12 können nicht ganz bis zum Rand des Aktors 4 reichen. Dann sind die Folien 15 nicht notwendig.

FIG. 1B zeigt eine Schnittansicht des Absperrorgans aus FIG. 1A in einem Öffnungszustand. An den Stromleitungen 13 und 14 liegen verschiedene Potentiale (Masse und positive Spannung) an, so dass sich die Elektroden 11, 12 eines jeden Paars anziehen und die dazwischen liegenden Folien 10 zusammengedrückt sind. Aufgrund der Inkompressibilität dehnen sich die Folien dabei seitlich etwas aus (nicht dargestellt). Das Schließelement 3 hat sich von dem Durchlasselement 1 gelöst, und es ist ein Spalt 17 zwischen dem Durchlasselement 1 und dem Schließelement 3 vorhanden, so dass eine Fluid von der Kammer 5 durch den Durchströmungsbereich 7 in die Kammer 6 strömen kann und umgekehrt.

Im Folgenden werden funktionsgleiche Elemente mit den gleichen Bezugszeichen gefolgt von einem Kleinbuchstaben bezeichnet.

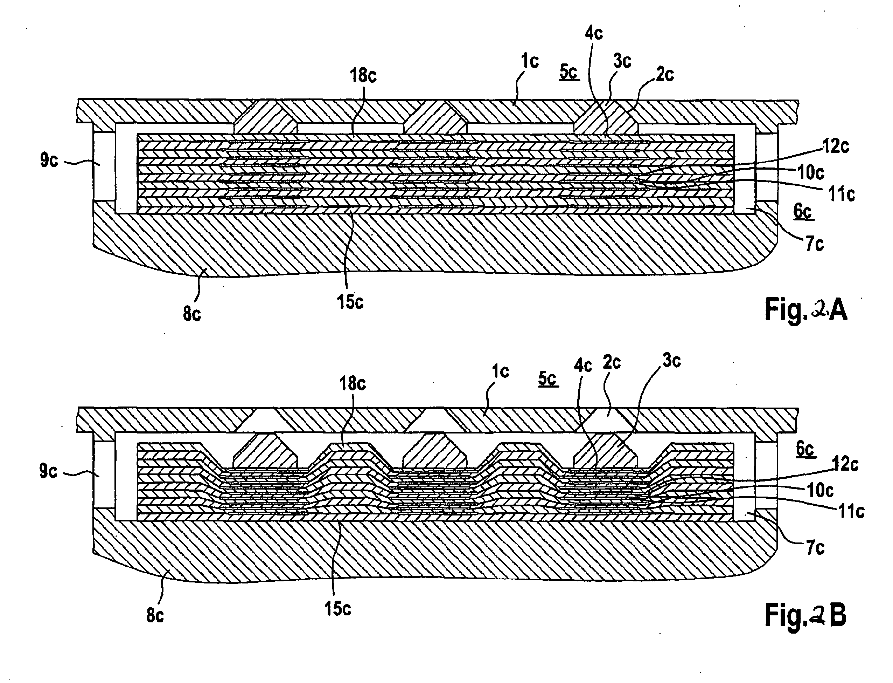

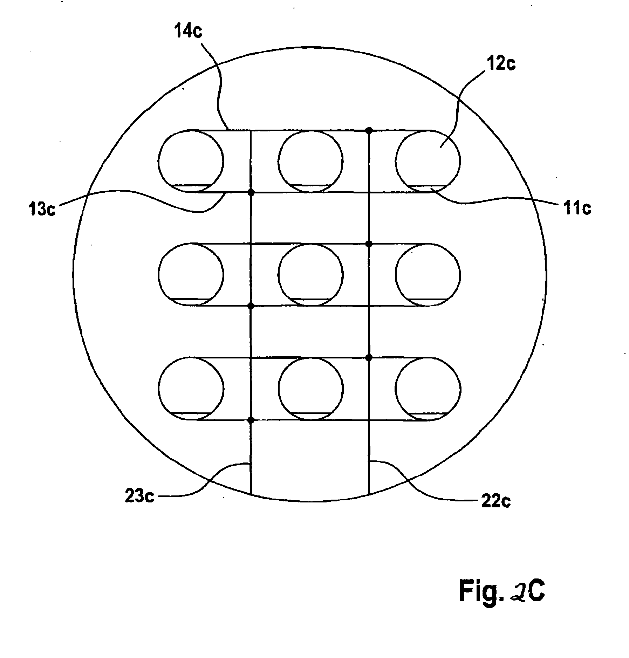

FIG. 2A zeigt eine Schnittansicht einer erfindungsgemäßen Anordnung aus mehreren Absperrorganen in einem Schließzustand. Die Aktoren 4a weisen gemeinsame Folien 10c auf. Die Durchlasselemente sind als ein gemeinsames Durchlasselement 1c aufgebaut Die Schließelemente 3c weisen im Unterschied zu den FIG. 1A und 1B einen kegelstumpfförmigen Schließabschnitt auf, der an einen ebenfalls konischen Rand einer Durchlassöffnung 2c angepasst ist. Alternativ können für die erfindungsgemäße Anordnung aber auch die Durchlassöffnungen 2 und die Schließelemente 3 gemäß der FIG. 1A und 1B zum Einsatz kommen. FIG. 2B zeigt eine Schnittansicht der Anordnung aus mehreren Absperrorganen aus FIG. 2A in einem Öffnungszustand. FIG. 2C zeigt eine schematische Ansicht der Anordnung aus mehreren Absperrorganen aus FIG. 2A und FIG. 2B. Die Elektroden 11c und 12c werden durch die elektrischen Leitungen 13c und 14c kontaktiert Die elektrischen Leitungen 13c und 14c sind jeweils gut isoliert und fest zwischen zwei Folien 10c aufgenommen und mit der Stromleitung 23c bzw. 22c verbunden, so dass die Absperrorgane in dieser Ausführungsform nur gemeinsam betätigt werden können. Oft ist es jedoch sinnvoll, die Absperrorgane einzeln zu betätigen. Dann werden nur die elektrischen Leitungen 13c mit einer Stromleitung 23c gemeinsam verbunden und an Masse angeschlossen, während für die Elektroden 12c jeweils ein separater Kontakt vorgesehen ist. Durch Anlegung einer Spannung an eine bestimmte Leitung 14c kann dann ein bestimmter Aktor 4c betätigt werden.

Die Folien 10c können als mehrere Folien oder Folienbereiche aufgefasst werden, die einstückig als eine einzige Folie ausgebildet sind. In den Schnittansichten der FIG. 1A und FIG. 1B würde sich ein Aktor mit nur einer einzigen Folie nur dadurch unterscheiden, dass die einzelnen Folien 10 dort einstückig miteinander verbunden und gefaltet sind, wo die Elektroden nicht ganz bis zum Rand der Folien 10 reichen.

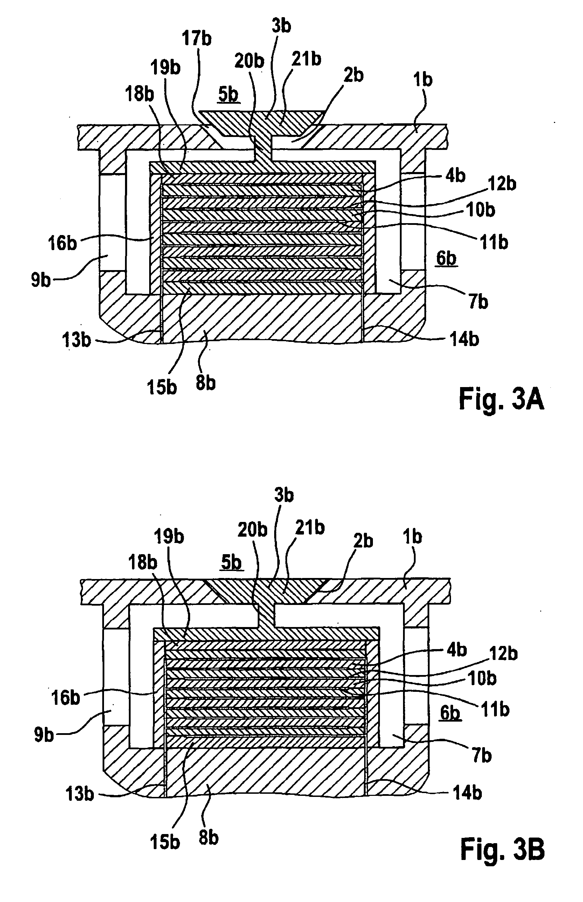

FIG. 3A zeigt eine Schnittansicht eines Absperrorgans gemäß einer weiteren Ausführungsform in einem Öffnungszustand. Das Absperrorgan gemäß der weiteren Ausführungsform unterscheidet sich dadurch von dem Absperrorgan gemäß der vorherigen Ausführungsform, dass es ein Schließelement 3b mit einem kegelstumpfförmigen Schließabschnitt 21b aufweist, der an einen ebenfalls konischen Rand einer Durchlassöffnung 2b angepasst ist. Der kegelstumpfförmige Schließabschnitt 21b ist über einen Schaft 20b mit einem Befestigungsabschnitt 19b verbunden, der auf der Oberseite des Aktors 4b befestigt ist Der Schaft 20b ist von dem Durchströmungsbereich 7b durch die Durchlassöffnung 2b hindurchgeführt. Dies ermöglicht es, den Schließabschnitt 21b in der Kammer 5b außerhalb des Durchströmungsbereichs 7b so anzuordnen, dass im unbestromten Zustand ein Spalt 17b zwischen dem Durchlasselement 1b und dem Schließelement 2b ausgebildet ist Auf der Oberseite des Aktors 4b ist eine Folie 18b vorgesehen.

FIG. 3B zeigt eine Schnittansicht des Absperrorgans aus FIG. 3A in einem Schließzustand. An den Stromleitungen 13b und 14b liegen verschiedene Potentiale (Masse und positive Spannung) an, so dass sich die Elektroden 11b, 12b eines jeden Paars anziehen und die dazwischen liegenden Folien 10b zusammengedrückt sind. Der kegelstumpfförmige Schließabschnitt 21b des Schließelements 3b wird gegen den konischen Rand der Durchlassöffnung 2b gedrückt, so dass die Durchlassöffnung 2b verschlossen ist.

## Patentansprüche

1. Anordnung aus mehreren Absperrorganen, wobei jedes der Absperrorgane ein Durchlasselement (1c) und ein Schließelement (3c) umfasst, wobei in jedem Durchlasselement (1c) eine Durchlassöffnung (2c) ausgebildet ist, wobei jedes Absperrorgan einen Aktor (4c) aufweist, um das jeweilige Schließelement (3c) zwischen einer Schließstellung und einer Öffnungsstellung zu bewegen, wobei die Aktoren (4c) in einem Durchströmungsbereich (7c) aufgenommen sind, und wobei die Schließelemente (3c) in der Schließstellung jeweils fest an einem Bereich der jeweiligen Durchlasselemente (1c) anliegen, der die jeweilige Durchlassöffnung (2c) umgibt, **dadurch gekennzeichnet, dass** die Aktoren (4c) ein gemeinsames Element aus einem elektroaktiven Werkstoff und jeweils zwei Elektroden (11c) umfassen.

2. Anordnung nach Anspruch 1, **dadurch gekennzeichnet, dass** das Element aus elektroaktivem Werkstoff als Folie (10c) ausgebildet ist, die zwischen den zwei flächigen Elektroden (11c) angeordnet ist, und dass die Aktoren (4c) weitere gemeinsame Folien (10c) aus elektroaktivem Werkstoff aufweisen, die jeweils zwischen zwei Elektroden (11c, 12c) eines jeden Aktors (4c) angeordnet sind.

3. Anordnung nach Anspruch 1, **dadurch gekennzeichnet, dass** das Schließelement (3c) einen kegelstumpfförmigen Schließabschnitt aufweist.

4. Anordnung nach einem der vorhergehenden Ansprüche, **dadurch gekennzeichnet, dass** eine Rückstellfeder vorgesehen ist, um eine Rückstellung der Aktoren (4c) zu beschleunigen.

## Claims

1. Arrangement comprising a plurality of shut-off members, wherein each of the shut-off members comprises a passage element (1c) and a closure element (3c), wherein a passage opening (2c) is formed in each passage element (1c), wherein each shut-off member has an actuator (4c) in order to move the respective closure element (3c) between a closed position and an open position, wherein the actuators (4c) are accommodated in a through-flow region (7c), and wherein the closure elements (3c), in the closed position, each rest firmly against a region of the respective passage elements (1c) which surrounds the respective passage opening (2c), **characterized in that** the actuators (4c) comprise a common element made of an electroactive material and in each case two electrodes (11c).

2. Arrangement according to Claim 1, **characterized in that** the element made of electroactive material is in the form of a foil (10c) which is arranged between the two planar electrodes (11c), and **in that** the actuators (4c) have further common foils (10c) which are made of electroactive material and which are each arranged between two electrodes (11c, 12c) of each actuator (4c).

3. Arrangement according to Claim 1, **characterized in that** the closure element (3c) has a frustoconical closure portion.

4. Arrangement according to one of the preceding claims, **characterized in that** a restoring spring is provided in order to accelerate restoration of the actuators (4c).

## Revendications

1. Agencement constitué de plusieurs organes de verrouillage, chacun des organes de verrouillage comprenant un élément de passage (1c) et un élément de fermeture (3c), une ouverture de passage (2c) étant réalisée dans chaque élément de passage (1c), chaque organe de verrouillage présentant un actionneur (4c), afin de déplacer l'élément de fermeture respectif (3c) entre une position de fermeture et une position d'ouverture, les actionneurs (4c) étant reçus dans une région parcourue par l'écoulement (7c), et les éléments de fermeture (3c) s'appliquant dans la position de fermeture à chaque fois fermement contre une région des éléments de passage respectifs (1c) qui entoure l'ouverture de passage respective (2c), **caractérisé en ce que** les actionneurs (4c) comprennent un élément commun constitué d'un matériau électroactif et à chaque fois deux électrodes (11c).

2. Agencement selon la revendication 1, **caractérisé en ce que** l'élément est réalisé en un matériau électroactif sous forme de feuille (10c), qui est disposée entre les deux électrodes planes (11c), et **en ce que** les actionneurs (4c) présentent d'autres feuilles communes (10c) en matériau électroactif, qui sont à chaque fois disposées entre deux électrodes (11c, 12c) de chaque actionneur (4c).

3. Agencement selon la revendication 1, **caractérisé en ce que** l'élément de fermeture (3c) présente une portion de fermeture de forme tronconique.

4. Agencement selon l'une quelconque des revendications précédentes, **caractérisé en ce qu'**il est prévu un ressort de rappel servant à accélérer le rappel des actionneurs (4c).
